# EUROPEAN PATENT APPLICATION

(11) **EP 3 739 084 A1**
(43) Date of publication of application: **18.11.2020**
(21) Application number: 19174448.1
(22) Date of filing: 14.05.2019
(51) Int. Cl.: C25B 1/04, F28D 20/00, F01K 3/18, F01K 17/04, H01M 8/0656, H01M 8/18, C25B 15/08

(54) **HYDROGEN PRODUCTION SYSTEM AND METHOD FOR PRODUCING HYDROGEN IN A HYDROGEN PRODUCTION SYSTEM**

(71) Applicant: Siemens Gamesa Renewable Energy GmbH & Co. KG, 20097 Hamburg (DE)
(72) Inventor: Ashok, Raghavan, 21073 Hamburg (DE); Eggers, Jan Rudolf, 21640 Bliedersdorf (DE); Krüger, Philipp, 22589 Hamburg (DE); Macele, Julien, 22769 Hamburg (DE); Wiktor, Samuel-Matthias, 22926 Ahrensburg (DE); Zaczek, Alexander, 22765 Hamburg (DE)
(74) Representative: Aspacher, Karl-Georg

(57) **Abstract**

The invention relates to a hydrogen production system (1) comprising a thermal energy storage (10) having a housing (11), a storage chamber (12) with heat storage material (13) inside the storage chamber (12) and a fluid inlet port (14) fluidically connected to the storage chamber (12) and a fluid outlet port (16) fluidically connected to the storage chamber (12), and at least one high temperature electrolyser (20) for producing hydrogen (D), whereby the at least one high temperature electrolyser (20) is thermally connected to the heat storage material (13) of the storage chamber (12) of the thermal energy storage (10). The invention further relates to a method for producing hydrogen (D) in the hydrogen production system (1).

## Description

The invention relates to a hydrogen production system and a method for producing hydrogen in a hydrogen production system.

High temperature electrolysers, such as solid oxide electrolyser cells, are of high interest in order to produce renewable fuels. Renewable energy in the form of electricity may be converted to heat and further in an electrolysis process of the high temperature electrolyser to hydrogen. This helps with the fluctuation character of the renewable energy production, that is, contrary to nuclear energy and energy from fossil fuels, for example, renewable energy cannot be produced according to energy demand but fluctuates due to its natural source. However, the produced hydrogen may be stored e.g. in a hydrogen tank.

It is an object of the invention to provide an efficient hydrogen production system, that is less dependent on energy sources other than from renewable energy.

This object is solved by the subject-matter of the claims. In particular, the object is solved by a hydrogen production system according to claim 1 and a method for producing hydrogen according to claim 12. Further details of the invention unfold from the other claims as well as the description and the drawings. Thereby, the features and details described in connection with the hydrogen production system of the invention apply in connection with the method for producing hydrogen of the invention, so that regarding the disclosure of the individual aspects of the invention it is or can be referred to one another.

According to a first aspect of the invention, the object is solved by a hydrogen production system comprising a thermal energy storage having a housing, a storage chamber with heat storage material inside the storage chamber and a fluid inlet port fluidically connected to the storage chamber and a fluid outlet port fluidically connected to the storage chamber, and at least one high temperature electrolyser for producing hydrogen, whereby the at least one high temperature electrolyser is thermally connected to the heat storage material of the storage chamber of the thermal energy storage.

The high temperature electrolysis provided by means of the invention is more economical and more efficient than lower temperature electrolysis, such as alkaline water electrolysis or PEM electrolysis. This is due to the lower specific electricity consumption because at least some of the energy is supplied as heat by the thermal energy storage. Supplying heat by the thermal energy storage compensates for the fluctuation character of the renewable energies and allows operation of the high temperature electrolysis at optimal operating point, for example.

In the invention, the thermal energy storage is used for storing heat. In the following a preferred design of the thermal energy storage is introduced in more detail.

Preferably the thermal energy storage may be a horizontal storage with the main fluid flow direction in horizontal direction. It comprises at least one fluid inlet port for receiving a working fluid, such as water, hot or cold steam, air, nitrogen or argon and at least one fluid outlet port for ejecting the working fluid. The thermal energy storage further comprises a housing, preferably with insulation, comprising a storage chamber with heat storage materials inside the housing.

The storage chamber may be substantially a space, cavity, excavation or - as previously said - a housing in which the heat storage material is located. Within the storage chamber a heat exchange between the working fluid and the heat storage material takes place. In order to provide an efficient heat exchange, the heat exchange chamber is preferably thermally insulated against the surroundings. The loss of thermal energy is reduced by the thermal insulation.

For a modified distribution of the working fluid within the storage, instead of a single inlet port or a single outlet port, a plurality of inlet ports and/or a plurality of outlet ports may be arranged in the thermal energy storage.

The housing of the thermal energy storage may be substantially in cuboid or cylindrical form. The storage may form a horizontal heat exchange chamber. The term "horizontal heat exchange chamber" implies a horizontal main (average) flow of the working fluid or heat transfer fluid through the chamber interior. The flow direction of the horizontal main flow is essentially parallel to the average surface of the earth. The horizontal direction is essentially a perpendicular direction to the direction of the gravity force which affects the heat transfer fluid. A horizontally oriented direction of the heat exchange flow can be achieved by lateral inlet openings and/or lateral outlet openings. The horizontal heat exchange chamber comprises these openings in its side chamber boundaries.

The high temperature electrolyser may be integrated within the thermal energy storage, in particular the housing of the thermal energy storage. Thereby, rapid shifts in temperature of the high temperature electrolyser are avoided.

In one first mode of operation, a charging mode and in particular a charging cycle, hot charging mode working fluid will be provided via the fluid inlet port. After passing through the thermal energy storage and passing along the heat storage materials and thereby heating these heat storage materials, a cooler charging mode working fluid is exhausted via the fluid outlet port.

In a second mode of operation, a discharging mode and in particular a discharging cycle, the direction of the working fluid flow may be reverted, so that a cool discharging mode working fluid is supplied to the opening which was introduced as fluid outlet port, now acting as a fluid inlet port. At the other end of the storage end, i.e. its hot end, hot discharging mode working fluid is exhausted via the port that was previously introduced as fluid inlet port, therefore now acting as fluid outlet port.

Thus, in the charging mode the thermal energy storage may be charged with thermal energy by feeding a hot charging mode working fluid, such as hot steam, to the fluid inlet port. The hot charging mode working fluid will flow through the thermal energy storage and thereby heat up the heat storage materials. The thereby cooled charging mode working fluid leaves the storage via the fluid outlet port. After the charging is completed, the thermal heat storage may be left in a standstill period of hours or even days until the stored thermal energy is needed and discharged by feeding a cold discharging mode working fluid, such as air, to the fluid inlet port or as explained before, in a reverse mode, to the port previously mentioned as fluid outlet port. After flowing through the thermal energy storage, the heated discharging mode working fluid is ejected via the second port previously mentioned as fluid inlet port.

Preferably, the thermal insulation may comprise at least one, preferably at least two thermal insulation layers. The thermal insulation layer may comprise at least one thermal insulation material selected from the group consisting of ceramics, concrete, sinter, stones, foamed clay, mineral wool, mineral foam, mineral fibers, foam glass, foil, in particular plastic foil, and soil layer with filled ground or sand. Thereby it is advantageous that the thermal insulation material comprises a density between 300 kg/m3 and 1.500 kg/m3, even though lower densities are possible, too. The function of the insulation is to prevent heat losses to the exterior and to prevent working fluid from exiting the storage at locations other than the inlet/outlet section.

The thermal energy storage is especially adapted for operation at high temperatures. Therefore, in a preferred embodiment, an operating temperature of the operating mode is selected from the range between 300 °C and 1000 °C, preferably selected from the range between 500 °C and 1000 °C, more preferably selected from the range between 600 °C and 1000 °C, 650 °C to 1000 °C and most preferably between 700 °C and 1000 °C. A deviation of the temperature ranges is possible. In this context, very advantageous is an upper limit of the temperature range of 900 °C and most preferably an upper limit of the temperature range of 800 °C.

Preferably, the thermal energy storage is a sensible heat storage, a latent heat storage or a thermo-chemical heat storage. In a sensible heat storage, heat storage material such as concrete, steel elements or liquids, for example molten salt, may be used for storing thermal energy. In a latent heat storage, heat storage material such as metal or metal alloys may be used, whereby the phase change of the metal or metal alloy is facilitated for storage of thermal energy. In a thermo-chemical heat storage, energy is stored in a thermo-chemical energy storage material via an endothermic reaction whereas energy can be released via an exothermic reaction.

Preferably, the heat storage material comprises sand and/or stones. The heat storage chamber may comprise multiple different heat storage materials. The stones can be natural stones or artificial stones. Mixtures thereof are possible, too. Artificial stones can consist of containers which are filled with heat storage material. Preferably, the stones comprise gravels (pebbles), rubbles and/or grit (splits). The artificial material comprises preferably clinkers, ceramics, steel or steel slack pellets. The stones may in particular be selected from the group of bricks, lava stones, vulcanites, granites, basalts or ceramics provided as bulk material, for example. This can also be called pebble bed.

Further preferably, the heat storage material forms a tunnel system of heat exchange channels within the storage chamber. The thermal energy storage may form inside a kind of mesh network or a tunnel system of heat exchange channels embedded into the storage chamber such that the heat exchange flow of the working fluid or heat transfer fluid through the heat exchange channels causes the heat exchange between the heat storage elements and the working fluid. The heat exchange channels can be formed by interspaces (gaps) of the heat storage material, e.g. between the stones. In addition, or alternatively, the heat storage material may be porous. Open pores of the heat storage material form the heat exchange channels.

Moreover, preferably, the fluid inlet port is formed by a diffusor section of the thermal energy storage and/or the fluid outlet is formed by a nozzle section of the thermal energy storage. The diffuser section evenly distributes the working fluid into the thermal storage and reduces the flow speed of the working fluid. The nozzle section increases flow speed and pressure of the working fluid leaving the thermal energy storage in the housing and forwards it to fluid outlet port for ejection from the thermal energy storage. Optionally, the diffuser section of the thermal energy storage may comprise a convection reducing structure, for example by providing a vertical layer of convection reducing elements within the diffuser section. The convection reducing elements may be kept in the desired positions by perforated metal plates.

In the invention, the high temperature electrolyser or high temperature electrolyser cell of the hydrogen production system is used for producing hydrogen using heat from the thermal energy storage. In the following a preferred design of the hydrogen production system is introduced in more detail.

It is preferred, that the fluid inlet port and/or the fluid outlet port of the thermal energy storage is thermally, in particular fluidically, connected to an electric heater, whereby preferably the electric heater is electrically connected to a renewable energy source. An electric heater thermally connected to the fluid inlet port enables the heating of the working fluid in the charging mode by means of electricity, such as may be provided from a renewable energy source. That the fluid inlet port is fluidically connected to the electric heater means that the working fluid is heated within the electric heater by means of a heating coil, for example. An electric heater thermally connected to the fluid outlet port enables a further heating of the working fluid in the charging mode by means of electricity, so that an even higher temperature of the working fluid may be achieved at the high temperature electrolyser to increase the efficiency of the hydrogen production system.

It is further preferred, that a control unit is coupled to the hydrogen production system, whereby the control unit is configured to operate the hydrogen production system in a first mode, in which electrical energy is supplied to the electric heater, wherein it is converted to thermal energy, whereby the thermal energy is transferred to the high temperature electrolyser, in which hydrogen is produced, a second mode, in which electrical energy is supplied to the electric heater, wherein it is converted to thermal energy, whereby the thermal energy is transferred to the thermal energy storage, in which it is stored, a third mode, in which no electrical energy is supplied to the electric heater but thermal energy from the thermal energy storage is transferred to the high temperature electrolyser, in which hydrogen is produced, and a fourth mode, in which neither electrical energy is supplied to the electric heater nor thermal energy is transferred to the thermal energy storage. The four modes are separate operation modes of the hydrogen production system and the control unit is capable of operating any one of these modes at one time. For example, when the thermal energy storage is out of order, the hydrogen production system may be operated in the first mode. For example, when there is no current demand for hydrogen, the hydrogen production system may be operated in the second mode. For example, when the thermal energy storage is at a defined threshold of thermal energy capacity or currently there is no electrical energy from renewable sources available, the hydrogen production system may be operated in the third mode. And, for example, when there is neither electrical energy from renewable sources available nor thermal energy stored in the thermal energy storage, the hydrogen production system may be operated in the fourth mode. By means of the control unit capable of the above operation modes, the electrical energy supply and hydrogen production are temporally decoupled from one another. Thereby, the problems of fluctuation of the renewable energy sources and fluctuation in demand of hydrogen are solved. The thermal energy storage may have a much larger thermal energy capacity than the high temperature electrolyser will need to operate for a predetermined time.

It is also preferred, that the at least one high temperature electrolyser, in particular a steam cycle of the at least one high temperature electrolyser, is thermally connected to the thermal energy storage by means of a heat exchanger. The heat exchanger provides an efficient way of transferring the heat from the heated working fluid to the high temperature electrolyser.

Moreover, it is preferred, that two high temperature electrolysers of the at least one high temperature electrolyser are connected in series to each other. Thereby, a residual heat leaving a first high temperature electrolyser may be used in a second high temperature electrolyser. Thus, the overall efficiency of the hydrogen production system may be increased. Further, it is preferred, that a turbine is connected to the at least one high temperature electrolyser, whereby the turbine is connected to a generator. Thereby, electricity produced from renewable energies may be stored as thermal energy when it is not needed and may be recovered by means of the turbine and generator at a time, when it is needed.

Also, it is preferred, that the turbine and the at least one high temperature electrolyser are connected in parallel to each other. Thereby, it is possible to easily switch between the production of hydrogen and generation of electricity.

Preferably, the at least one high temperature electrolyser is connected via at least one hydrogen line to a hydrogen storage, a polymer electrolyte membrane fuel cell, a solid oxide fuel cell, an ammonia synthesis device, a methanation device and/or a hydrogen infrastructure, such as a hydrogen grid. Thereby, the produced hydrogen may be stored within the hydrogen storage or immediately be used after production.

Further preferably, the combustion chamber is connected to a turbine, whereby the turbine is connected to a generator and the turbine is thermally connected to the fluid inlet port. Thereby, residual heat from the turbine may be used for heating the working fluid entering the thermal heat storage.

According to a second aspect of the invention, the object mentioned in the beginning is solved by a method for producing hydrogen in a hydrogen production system according to the invention, whereby the method comprises the steps of: (a) heating a charging mode working fluid in a charging mode, so that a heated charging mode working fluid is obtained, (b) transporting the heated charging mode working fluid to the fluid inlet port of the thermal energy storage, whereby thermal energy from the heated charging mode working fluid is transferred to the heat storage material of the storage chamber, so that stored thermal energy is stored in the heat storage material, (c) transporting discharging mode working fluid of a discharging mode to the fluid inlet port of the thermal energy storage, whereby the stored thermal energy from the heat storage material of the storage chamber is transferred to the discharging mode working fluid, so that a heated discharging mode working fluid is obtained, which exits the fluid outlet port of the thermal energy storage and the heat from the heated discharging mode working fluid is thermally transferred to the at least one high temperature electrolyser, (d) producing hydrogen in the at least one high temperature electrolyser by using the heat from the heated discharging mode working fluid. In particular, the cooled charging mode working fluid exits the fluid outlet port of the thermal energy storage.

Preferably, heat from the heated discharging mode working fluid is transferred to the at least one high temperature electrolyser when a capacity of thermal energy of the storage chamber is at a defined threshold, in particular a maximum capacity, or production of hydrogen is demanded. In particular, a control unit of the hydrogen production system may be connected to at least one temperature sensor of the thermal energy storage. The at least one temperature sensor sends signals corresponding to temperatures of the heat storage material to the control unit. When a defined threshold temperature value is determined, a charging mode may be stopped and/or the heat discharging mode may be initiated.

Further preferably, the at least one thermal energy storage is connected to a renewable energy source and the heat from the heated discharging mode working fluid is transferred to the at least one high temperature electrolyser so that a constant hydrogen production level of the at least one high temperature electrolyser is maintained. Thereby, the fluctuating character of renewable energies may be controlled so that the high temperature electrolyser can be operated efficiently at a constant or demand oriented hydrogen production rate.

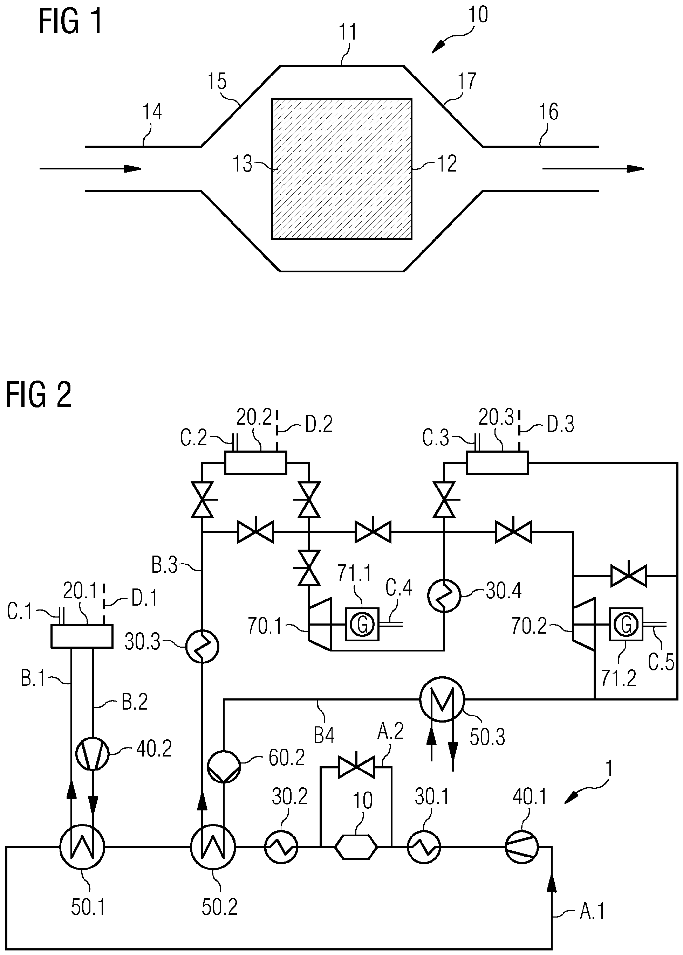

Further advantages, features and details of the invention unfold from the following description, in which by reference to drawings FIG. 1 to 3 embodiments of the present invention are described in detail. Thereby, the features from the claims as well as the features mentioned in the description can be essential for the invention as taken alone or in an arbitrary combination. In the drawings, there is schematically shown:
- FIG. 1: a sectional cut through a thermal energy storage as can be used in a hydrogen production system according to the invention,
- FIG. 2: a circuit diagram of a hydrogen production system according to a first embodiment of the invention, and
- FIG. 3: a circuit diagram of a hydrogen production system according to a second embodiment of the invention.

Same objects in FIG. 1 to 3 are denominated with the same reference number. If there is more than one object of the same kind in one of the figures, the objects are numbered in ascending order with the ascending number of the object being separated from its reference number by a dot. The specific dimensions of features and parts in the figures are exemplary and may be enlarged for ease of reference only.

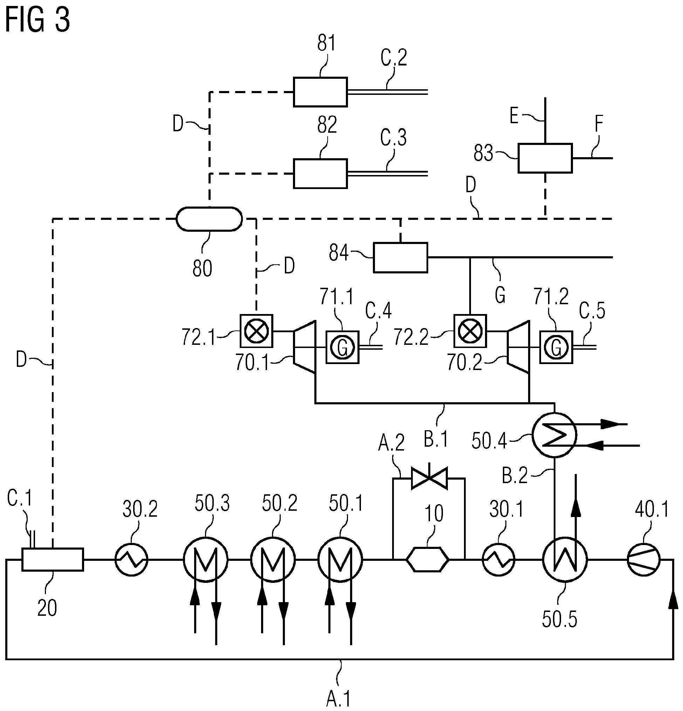

FIG. 1 shows a sectional cut through a thermal energy storage 10 as can be used in a hydrogen production system 1 (see FIG. 2 and 3) according to the invention. The thermal energy storage 10 comprises a housing 11, in which a storage chamber 12 filled with heat storage material 13 is located. Working fluid may enter a fluid inlet port 14 of the housing 11 in the direction indicated by an arrow. The fluid inlet port 14 is connected to a diffusor section 15. The fluid inlet port 14 and the diffusor section 15 are formed by the housing 11. Further, the working fluid may exit the housing 11 in the direction indicated by a further arrow through a fluid outlet port 16. The fluid outlet port 16 is connected to a nozzle section 17. The fluid outlet port 16 and the nozzle section 17 are formed by the housing 11.

FIG. 2 shows a circuit diagram of a hydrogen production system 1 according to a first embodiment of the invention.

The thermal energy storage 10 of the hydrogen production system 1 is thermally connected by means of a heat exchanger 50.1 to a steam cycle B.1, B.2 of a high temperature electrolyser 20.1. In particular, an air cycle A.1 passing the thermal energy storage 10 is connected to the heat exchanger 50.1. In this particular case, the air cycle A.1 is at atmosphere pressure of 1 bar. The air cycle A.1 may be alternatively any other fluid cycle having a working fluid. Cold air flowing in the air cycle A.1 by means of a fan 40.1 flows to an electric heater 30.1 thermally connected to the thermal energy storage 10. The fan 40.1 may alternatively or additionally be a compressor. In particular, a flow channel of the air cycle A.1 is connected to the electric heater 30.1. The electric heater 30.1 may be supplied with renewable electrical energy from a wind turbine (not shown), for example, and heat up the air in the air cycle A.1. From the electric heater 30.1, the heated working fluid is released at a temperature in the range of 500 °C to 1500 °C, in particular 600 °C to 1000 °C and more particularly 700 °C to 900 °C into the fluid inlet port 14. Thereby, the heat storage material 13 of the thermal energy storage 10 is charged with thermal energy in a charging mode. Cold air is released from the fluid outlet port 16 of the thermal energy storage 10 into the air cycle A.1 and the air streams back to the fan 40.1. From there, the charging mode is continued with heating the thermal energy storage 10 until a certain threshold of thermal capacity is reached or energy supply from renewable sources stops, for example.

Then, in a discharge mode, the electric heater 30.1 is turned off and cold discharge mode working fluid, in this case cold air, streams through the thermal energy storage 10, in particular the heated heat storage material 13. Stored heat from the heat storage material 13 is transferred to the cold air, so that the air is heated. As a heated discharge mode working fluid, the air leaves the fluid outlet port 16. Optionally, the fluid outlet port 16 is thermally connected to a further electric heater 30.2. By means of the further electric heater 30.2, the air can be further heated up to even achieve higher temperatures of the air, e.g. in the range of 600 °C to 1500 °C, in particular 700 °C to 900 °C, before exchanging its heat with the steam cycle B.1, B.2, in particular water vapor steam cycle, of the high temperature electrolyser 20.1. The further electric heater 30.2 may be supplied with electrical energy from a renewable source as well.

At the heat exchanger 50.1, the heat from the heated air is transferred to the steam cycle B.1, B.2 by means of the heat exchanger 50.1. Steam, in particular water vapor, in a steam line B.1 of the steam cycle B.1 is streamed by a fan or compressor 40.2 within the steam cycle B.1, B.2 to the heat exchanger 50.1. The steam is heated by means of the heat of the heated air that is transferred through the heat exchanger 50.1 and streamed through steam line B.2 to the high temperature electrolyser 20.1 in order to produce hydrogen D.1. Therefore, also electricity C.1 is supplied to the high temperature electrolyser 20.1, which may be from a renewable source. The high temperature electrolyser 20.1 may be a solid oxide electrolyser cell. The temperature of the air after passing the heat exchanger 50.1 may be in the range of 300 °C to 1500 °C, in particular 500 °C to 900 °C, for example.

Further, there is another steam cycle B.3, B.4 to which the air cycle A.1 is connected by means of a further heat exchanger 50.2. This steam cycle B.3, B.4 may be provided instead of the steam cycle B.1, B.2 and heat exchanger 50.1 or additionally. In the steam cycle B.3, B.4 the steam line is indicated by B.3 and the steam line by B.4, whereby a pump 60 is arranged within the steam line B.4. In the steam line B.4, water is condensed and transported by means of the pump 60. A further electrical heater 30.3 may be arranged in the steam line B.3 as shown. In the steam cycle B.3, B.4, two further high temperature electrolysers 20.2, 20.3 are connected to each other in a series connection, whereby the overall efficiency is increased. Parallel to each of the high temperature electrolysers 20.2, 20.3, a turbine 70.1, 70.2 connected to a generator 71.1, 71.2 is connected. The circuitry comprises multiple valves for switching operation between the high temperature electrolysers 20.2, 20.3 and the turbines 70.1, 70.2. By means of the turbines 70.1, 70.2 and generators 71.1, 71.2, a residual heat of the steam coming from the high temperature electrolysers 20.2, 20.3 may be facilitated to even further increase the overall efficiency of the hydrogen production system by producing electricity C.4, C.5 by means of the turbines 70.1, 70.2 and generators 71.1, 71.2. Also, it can be switched between a production of hydrogen D.2, D.3 by means of the high temperature electrolysers 20.2, 20.3 and a production of electricity C.4, C.5 if preferred. As shown, a further electrical heater 30.4 is arranged in a line of the turbine 70.1 for reheating. Also, as shown, a further heat exchanger 50.3 or condenser, preferably with cooling tower, is arranged in the steam line B.4.

A bypass air line A.2 is connected to the air cycle A.1 bypassing the thermal energy storage 10. The bypass air line A.2 comprises a valve. When the valve is switched on, the air in the air cycle A.1 can bypass the thermal energy storage 10. When the valve is switched off, the air in the air cycle A.1 flows through the thermal energy storage 10. Thereby, the thermal energy from the heated air can be provided at either of the high temperature electrolysers 20.1, 20.2, 20.3 without passing the thermal energy storage 10. This operation may be in particular provided and useful when the thermal energy storage 10 is out of order due to service or modification work or in the first mode of operation of the hydrogen production system 1, for example.

FIG. 3 shows a circuit diagram of a hydrogen production system 1 according to a second embodiment of the invention. Here, the air cycle A.1 of the thermal energy storage 10 is connected to three heat exchangers 50.1, 50.2, 50.3 arranged in a flow direction of the air after the thermal energy storage 10 and the high temperature electrolyser 20. These heat exchangers 50.1, 50.2, 50.3 may be connected to another steam cycle, a process steam cycle and a district heating cycle, for example.

The produced hydrogen flows through a hydrogen line D to a hydrogen storage 80. Therefrom, it may be distributed to a polymer electrolyte membrane fuel cell 81 to produce electricity C.2, to a solid oxide fuel cell 82 to produce electricity C.3, to an ammonia synthesis device 83 to produce ammonia F and nitrogen E and a methanation device to produce methane G. A methanation line G of the methanation device 84 is also connected to a combustion chamber 72.2, which is connected to a turbine 70.2 and a generator 71.2 in order to produce electricity C.5 by means of the produced methane G. Also, the hydrogen line D coming from the hydrogen storage 80 is connected to a combustion chamber 72.1, which is connected to a turbine 70.1 and a generator 71.1 to produce electricity C.4 by means of the produced hydrogen D. In this case, both turbines 70.1, 70.2 are connected by steam line B.1 to a further heat exchanger 50.4 to form a combined cycle power plant, but alternatively only one of the turbines 70.1, 70.2 may be provided and/or connected thereto. The heat exchanger 50.4 is connected by means of a further steam cycle B.2 to a heat exchanger 50.5 arranged in the air cycle A.1 in the direction of air flow before the thermal energy storage 10. Thereby, residual heat from the heat exchanger 50.4 of the combined cycle power plant may be used to preheat the air in the air cycle A.1 before it enters the thermal energy storage 10 to increase the overall efficiency even further. Thus, it is preferred that energy from the hydrogen is provided as residual heat to preheat the working fluid, in this case air, entering the thermal energy storage 10.

## Claims

1. Hydrogen production system (1) comprising a thermal energy storage (10) having a housing (11), a storage chamber (12) with heat storage material (13) inside the storage chamber (12) and a fluid inlet port (14) fluidically connected to the storage chamber (12) and a fluid outlet port (16) fluidically connected to the storage chamber (12), and at least one high temperature electrolyser (20) for producing hydrogen (D), whereby the at least one high temperature electrolyser (20) is thermally connected to the heat storage material (13) of the storage chamber (12) of the thermal energy storage (10).

2. Hydrogen production system (1) according to claim 1,
**characterized in that**,
the thermal energy storage (10) is a sensible heat storage, a latent heat storage or a thermo-chemical heat storage.

3. Hydrogen production system (1) according to claim 1 or 2,
**characterized in that**,
the heat storage material (13) comprises sand and/or stones.

4. Hydrogen production system (1) according to any of the previous claims,
**characterized in that**,
the heat storage material (13) forms a tunnel system of heat exchange channels within the storage chamber (12).

5. Hydrogen production system (1) according to any of the previous claims,
**characterized in that**,
the fluid inlet port (14) and/or the fluid outlet port (16) of the thermal energy storage (10) are thermally, in particular fluidically, connected to an electric heater (30), whereby preferably the electric heater (30) is electrically connected to a renewable energy source.

6. Hydrogen production system (1) according to claim 5,
**characterized in that**,
a control unit is coupled to the hydrogen production system (1), whereby the control unit is configured to operate the hydrogen production system (1) in
- a first mode, in which electrical energy is supplied to the electric heater (30), wherein it is converted to thermal energy, whereby the thermal energy is transferred to the high temperature electrolyser (20), in which hydrogen (D) is produced,
- a second mode, in which electrical energy is supplied to the electric heater (30), wherein it is converted to thermal energy, whereby the thermal energy is transferred to the thermal energy storage (10), in which it is stored,
- a third mode, in which no electrical energy is supplied to the electric heater (30) but thermal energy from the thermal energy storage (10) is transferred to the high temperature electrolyser (20), in which hydrogen (D) is produced, and
- a fourth mode, in which neither electrical energy is supplied to the electric heater (30) nor thermal energy is transferred to the thermal energy storage (10).

7. Hydrogen production system (1) according to any of the previous claims,
**characterized in that**,
the at least one high temperature electrolyser (20), in particular a steam cycle (B) of the at least one high temperature electrolyser (20), is thermally connected to the heat storage material (13) of the storage chamber (12) of the thermal energy storage (10) by means of a heat exchanger (50) .

8. Hydrogen production system (1) according to any of the previous claims,
**characterized in that**,
at least two high temperature electrolysers (20) of the at least one high temperature electrolyser (20) are connected in series to each other.

9. Hydrogen production system (1) according to any of the previous claims,
**characterized in that**,
a turbine (70) is connected to the at least one high temperature electrolyser (20), whereby the turbine (70) is connected to a generator (71).

10. Hydrogen production system (1) according to claim 9,
**characterized in that**,
the turbine (70) and the at least one high temperature electrolyser (20) are connected in parallel to each other.

11. Hydrogen production system (1) according to any of the previous claims,
**characterized in that**,
the at least one high temperature electrolyser (20) is connected via at least one hydrogen line (D) to a hydrogen storage (80), a polymer electrolyte membrane fuel cell (81), a solid oxide fuel cell (82), a combustion chamber (72), an ammonia synthesis device (83),a methanation device (84) and/or a hydrogen infrastructure, such as a hydrogen grid.

12. Hydrogen production system (1) according to claim 11,
**characterized in that**,
the combustion chamber (72) is connected to a turbine (70), whereby the turbine (70) is connected to a generator (71) and the turbine is (70) thermally connected to the fluid inlet port (14).

13. Method for producing hydrogen (D) in a hydrogen production system (1) according to any of the previous claims, whereby the method comprises the steps of:
(a) heating a charging mode working fluid in a charging mode, so that a heated charging mode working fluid is obtained,
(b) transporting the heated charging mode working fluid to the fluid inlet port (14) of the thermal energy storage (10), whereby thermal energy from the heated charging mode working fluid is transferred to the heat storage material (13) of the storage chamber (12), so that stored thermal energy is stored in the heat storage material (13),
(c) transporting discharging mode working fluid of a discharging mode to the fluid inlet port (14) of the thermal energy storage (10), whereby the stored thermal energy from the heat storage material (13) of the storage chamber (12) is transferred to the discharging mode working fluid, so that a heated discharging mode working fluid is obtained, which exits the fluid outlet port (16) of the thermal energy storage (10) and the heat from the heated discharging mode working fluid is thermally transferred to the at least one high temperature electrolyser (20),
(d) producing hydrogen (D) in the at least one high temperature electrolyser (20) by using the heat from the heated discharging mode working fluid.

14. Method for producing hydrogen in a hydrogen production system (1) according to claim 13,
**characterized in that**,
the heat from the heated discharging mode working fluid is transferred to the at least one high temperature electrolyser (20) when a capacity of thermal energy of the storage chamber (12) is at a defined threshold, in particular a maximum capacity, or production of hydrogen is demanded.

15. Method for producing hydrogen in a hydrogen production system (1) according to claim 13 or 14,
**characterized in that**,
the at least one thermal energy storage (10) is connected to a renewable energy source and heat from the heated discharging mode working fluid is transferred to the at least one high temperature electrolyser (20) so that a constant hydrogen production level of the at least one high temperature electrolyser (20) is maintained.
